# EUROPEAN PATENT APPLICATION

(11) **EP 3 659 796 A1**
(43) Date of publication of application: **03.06.2020**
(21) Application number: 18208708.0
(22) Date of filing: 27.11.2018
(51) Int. Cl.: B32B 5/12, A62C 3/07, B32B 7/12, B32B 27/18, B32B 27/28, B32B 27/30, B32B 27/32, B32B 27/34, C08K 5/00, C09K 21/00, C09K 21/12

(54) **RAIL INTERIOR COMPLIANT THERMOPLASTIC COMPOSITE**

(71) Applicant: SABIC Global Technologies B.V., 4612 PX Bergen op Zoom (NL)
(72) Inventor: SOLENICKI, Goran, 4612 PX Bergen op Zoom (NL); SHARMA, Kirti, 4612 PX Bergen op Zoom (NL)
(74) Representative: Balder IP Law, S.L.

(57) **Abstract**

Fire-retardant composites, methods of making fire-retardant composites, and use thereof are described. A fire-retardant composite can include at least two fire-retardant laminates, and a porous thermoplastic core material disposed between the at least two fire-retardant laminates. Each laminate can have one or more ply, each of the plies can include a plurality of fibers in a thermoplastic polymer matrix that includes a fire-retardant composition. The fire-retardant composite meets European fire-retardant standards for rail transportation.

## Description

### BACKGROUND OF THE INVENTION

### A. Field of the Invention

The invention generally concerns fire-retardant composites. In particular, the fire-retardant composites are capable of meeting the rail transportation requirements for interior panels.

### B. Description of Related Art

Composite laminates can be used to form structures having advantageous structural characteristics, such as high strength, high stiffness, and/or relatively low weight when compared to similar structures formed from conventional materials. As a result, laminates are used in a variety of applications across a wide range of industries, including the automotive, aerospace, rail transportation, and consumer electronics industries.

Some laminates can include fibers, which can be made by impregnating a tow of fibers with a matrix material. In traditional impregnation techniques, a relatively high viscosity matrix material is forced through a dry and relatively low permeability tow of fibers. As a result, traditional impregnation techniques can produce fiber reinforced materials that have relatively low and/or unpredictable fiber volume fractions, relatively uneven distributions of fibers within the materials, excesses of matrix material, and/or the like. This can result in fiber reinforced laminates having undesirable and/or unpredictable structural characteristics. Other methods to make fire retardant laminates can include using fiber filled pellets that are molded or extruded to produce a shaped article of manufacture.

In many mass transportation applications (e.g., a train, a tram, a subway, a light rail, a monorail, an aircraft, a helicopter, a bus, a trolley, a ferry, a cable car, and the like.), it is desirable for a structural component or composite to be fire resistant to meet various specifications for fire, smoke, toxicity, and performance. Many countries have various standards for fire resistant materials used in the transportation industry, thus making it difficult to meet all of the standards with a single composite material. This can result in manufactures having to produce different materials for different regions, which can be inefficient from an economic as well as a manufacturing perspective. Examples of these standards include European Union EN-45545-2, American Section for the International Association for Testing Method (ASTM) E662, ASTM E162, Chinese standard TB/T, National Fire Protection Association (NFPA) 130, or the International Union of Railways standard UIC 564.

Various attempts to meet the fire retardant standards include making the components out of aluminum or other fire resistant metals or alloys, or adding fire retardant compositions to wood or particle-board materials. However, these solutions suffer in that the materials add weight to the overall structure.

Various attempts to provide fire resistant light-weight structural components have included using polymeric materials that include halogen plastic materials (*e.g*., fluorocarbon polymeric material, polyvinyl chloride, or the like). However, these materials suffer in that they can produce toxic, harmful, and undesirable halogen-containing gases and/or may not meet industry standards. Composites made from non-halogen containing polymers, while providing numerous advantages, can suffer in that many are flammable and/or may not provide the mechanical and/or physical properties necessary for the application (*e.g*., floor panels). By way of example, International Patent Application Publication No. WO 2016/174232 to Van der Mee et al., and WO 2015/051060 to Kenny describe fiber reinforced polymer composites for mass transit vehicles and automotive vehicles, respectively, where the composite is made by umolding polypropylene pellets having glass fiber cores. U.S. Patent No. 8,252,858 to Kishore et al. describe low smoke polyphenylene ether polystyrene compositions composites for transportation articles, building articles and construction articles.

While various attempts have been made to produce thermoplastic fire-retardant composites, these attempts have failed to meet the rail transportation industry fire standards and structural standards for mass transit vehicles.

### SUMMARY OF THE INVENTION

A discovery has been made that addresses the problems associated with fire-retardant composites used in the mass transportation (*e.g*., rail transportation) industry. The discovery is premised on a thermoplastic fire-retardant composite having a sandwich-type structure. The sandwich-type structure includes thermoplastic laminates and a thermoplastic core. It was found that such a structure can meet rail transportation industry standards (*e.g*., fire testing of materials and components for trains standard, which includes EN 45545-2 and structural requirements). Further, the materials used in this structure are light-weight and can avoid the off-gassing issues seen with many of the currently available composites. Additionally, the manufacturing processing steps used to make the composites of the present invention can be economically efficient and scalable for commercial production.

In certain aspects, a fire-retardant laminate can include one or more ply, at least one ply can include: (i) 15 wt.% to 40 wt.% based on the total weight of the ply, of a thermoplastic polymer matrix that includes (a) a polyarylene ether, preferably a polyphenylene ether (PPO) homopolymer, a PPO-polysiloxane copolymer (PPO-Si), or a blend thereof; or (b) a blend of a polyarylene ether and/or a PPO-Si with a different thermoplastic material comprising a polyamide material, a polystyrene material, or a polypropylene homopolymer, or any combination thereof ; and (ii) 0.5 to 15 wt.%, based on the total weight of the ply, a fire-retardant composition that can include a phosphorous containing compound; and (iii) 50 to 80 wt.%, based on the total weight of the ply, of fibers. The phosphorous containing compound can be bisphenol A bis(diphenylphosphate), resorcinol bis(diphenyl phosphate), a organometallic phosphinate, or a blend thereof. Resin and ply compositions that include polyarylene ethers and fire retardants are as exemplified in a non-limiting manner in the Example 1 and Tables 1-3. In one aspect, the thermoplastic polymer matrix includes PPO-Si or a blend of PPO-Si with a polyamide material, a polystyrene material, a polypropylene homopolymer, or any combination thereof (*e.g*., polyamide and polypropylene).

Fire-retardant composite are described that include the laminates of the present invention. A fire retardant composite can include: (a) a porous core material comprising a first thermoplastic polymer comprising polyethylene terephthalate, a fire-retardant polypropylene, a polycarbonate, a polyimide, a polyethersulfone, a polyurethane, a polyphenylene ether (PPO)/styrene blend, PPO/polyamide blend, PPO/polystyrene blend, PPO/polypropylene blend, or any combination thereof; (b)a first laminate, the first laminate being the laminate of any one of the laminates of the present invention; (c) a second laminate disposed on a side opposite the first side of the core, wherein the second laminate is the same or different than the first laminate; and (d) an optionally at least one adherent layer contacting at least a portion of the surface of the porous core material and at least a portion of the surface of at least one of the laminates. In a preferred embodiment, the laminates are the same. The core material can have open-cell foam structure, a closed-cell foam structure, a honeycomb structure, or combinations thereof. The optional adherent layer can include ethylene vinyl acetate, polypropylene, polypropylene-polyethylene terephthalate blends, acrylics, nitriles, silicone rubbers, styrene-butadiene-styrene copolymers, styrene-ethylene/butylene-styrene copolymers, styrene-ethylene/propylene copolymers, styrene-isoprene-styrene copolymers, or a combination thereof, preferably ethylene vinyl acetate. In some embodiments, the composite can have an average thickness between 0.2 mm and 100 mm. In certain embodiments, the composite can have a combination of the above-described features. For example, the laminates can be the same, the core can be a foam structure adhered to the laminates with ethyl vinyl acetate to produce a composite having a thickness between 0.2 mm to 100 mm. In another example, the composite having a thickness between 0.2 mm to 100 mm with two similar laminates coupled to the core as described.

Other objects, features and advantages of the present invention will become apparent from the following figures, detailed description, and examples. It should be understood, however, that the figures, detailed description, and examples, while indicating specific embodiments of the invention, are given by way of illustration only and are not meant to be limiting. Additionally, it is contemplated that changes and modifications within the spirit and scope of the invention will become apparent to those skilled in the art from this detailed description. In further embodiments, features from specific embodiments may be combined with features from other embodiments. For example, features from one embodiment may be combined with features from any of the other embodiments. In further embodiments, additional features may be added to the specific embodiments described herein.

### BRIEF DESCRIPTION OF THE DRAWINGS

Advantages of the present invention may become apparent to those skilled in the art with the benefit of the following detailed description and upon reference to the accompanying drawings.
**FIG. 1A** is an illustration of a cross-sectional view of a fire-retardant composite of the present invention having a sandwich-type structure that includes two thermoplastic laminate and a porous thermoplastic core.
**FIG. 1B** is an illustration of a cross-sectional view of a fire-retardant composite of the present invention having a sandwich-type structure that includes four plies and a porous thermoplastic core.
**FIG. 1C** is an illustration of a cross-sectional view of a fire-retardant composite of the present invention having a sandwich-type structure that includes six plies and a porous thermoplastic core.
**FIG. 2** is an illustration of cross-sectional view of a fire-retardant composite of the present invention having a sandwich-type structure that includes four plies, a porous thermoplastic core and an adherent layer.
**FIG. 3** is a flow chart of a method to make a sandwich-type composite of the present invention from two laminates and a porous thermoplastic core.
**FIG. 4** is a flow chart of a method to make a sandwich-type composite of the present invention having two laminates, a porous thermoplastic core, and two adherent layers.

While the invention is susceptible to various modifications and alternative forms, specific embodiments thereof are shown by way of example in the drawings. The drawings may not be to scale.

### DETAILED DESCRIPTION OF THE INVENTION

Many thermoplastic components made for the mass transportation industry (*e.g*., rail industry) fail the fire testing requirements and structural requirements. By way of example, most components made from polypropylene containing polymeric materials fail these tests. A discovery has been found that addresses the problems associated with conventional reinforced thermoplastic components. The discovery is premised on a fire-retardant thermoplastic composite that can include a laminate having a thermoplastic polymer (*e.g*., PET, PBT, PC, PI, PA, PPE, PPO-Si, and the like) and fire-retardant composition and a porous (*e.g*., honeycomb or foamed) thermoplastic core. The fire-retardant composite of the present invention can be compliant with interior rail transportation standards (*e.g*., EN 45545-2; R1, R6, R10 (HL1, HL2, HL3), TB/T (TB, TBT), NFPA 130, ASTM E662, ASTM E162, Chinese standard TB/T or the International Union of Railways standard UIC 564). These and other non-limiting aspects of the present invention are discussed in further detail in the following sections.

### A. Fire-retardant Composite

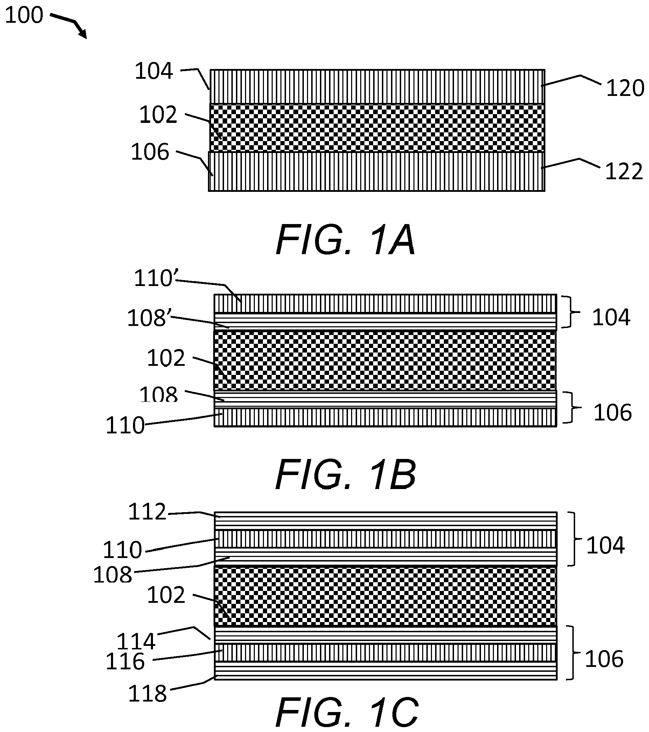

The fire-retardant composite of the present invention can have a sandwich-type structure having a thermoplastic core positioned between two thermoplastic laminates. FIGS. 1A-1C are cross-sectional illustrations of fire-retardant composite 100. Referring to FIG. 1A, composite 100 can have porous thermoplastic core 102, first laminate 104, and second laminate 106. While only one laminate is shown, it should be understood that multiple laminates can be used. First laminate 104 and second laminate 106 can be made of one ply or multiple plies *(e.g.,* 1, 2, 3, 4, 5, 6, 7, 8, 9, 10, 11, 11, 12, *etc.).* FIGS. 1B and 1C depict composite 100 with four plies (plies 108, 108', 110 and 110') and six plies (ply 108, 110, 112, 114, 116, and 118), respectively. One or all of the plies can include fibers 120 dispersed within polymeric matrix material 122 (*See,* FIG. 1A). It should be understood that the hatching in the plies of figures does not represent direction of the fibers unless indicated otherwise. The compositions of laminate 104 and 106 can be the same or different and is discussed in more detail in Section C below. In a preferred embodiment, laminate 104 and 106 can different compositions, similar compositions, substantially the same, or the same composition.

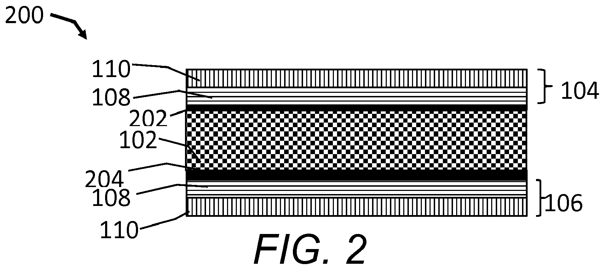

In some embodiments, composite 100 can include an adherent layer. The adherent layer can be used to improve the adhesion between plies and/or laminates and the core. FIG. 2 depicts composite 200 that include adherent layers 202 and 204 between laminate 104, laminate 106 and core 102. Adherent layers 202 and 204 can be the same or different adherent composition. In some embodiments, only one adherent layer is used. By way of example, composite 200 can only include adherent layer 202 and not adherent layer 204 (not shown). Adherent layers 202 and 204 can include adherent (adhesive) compositions and other components. Non-limiting examples of adherents include ethylene vinyl acetate, polypropylene, polypropylene-polyethylene terephthalate blends, acrylics, nitriles, silicone rubbers, styrene-butadiene-styrene copolymers, styrene-ethylene/butylene-styrene copolymers, styrene-ethylene/propylene copolymers, styrene-isoprene-styrene copolymers, a combination thereof, or blend thereof. In a preferred instance, ethylene vinyl acetate is used. In another embodiment, no adhesives are used. In some embodiments, the adherent is mixed with other additives including antioxidants, heat stabilizers, flow modifiers, colorants, *etc.,* or any combinations thereof. Adherents and other additives are available from commercial chemical suppliers such as, for example, Sigma-Aldrich® (U.S.A.), ExxonMobil Chemical (U.S.A.), LyondellBassell (U.S.A.), and the like.

The fire-retardant composite can be dimensioned and shaped according to respective applications. The overall thickness of the composite can be up to and even exceeding several millimeters. More specifically, the composite can have a thickness of 1 to 100 mm, 0.4 to 50 mm, 0.6 to 25 mm. The thickness of the composite can vary depending on the desired weight % of each laminate. The thickness of the composite can be obtained by controlling the thickness of the plies used to make the laminate. Composite 100 or 200 can be rectangular; however, other embodiments of the present laminates can be triangular, square, or otherwise polygonal (whether having sharp and/or rounded corners), circular, elliptical, or otherwise rounded, or can have an irregular shape. Some embodiments of the present composites can include one or more openings, notches, and/or the like, which can facilitate incorporation of the composite into a structure.

In some embodiments, the composite and/or laminates can be decorated. In use, a surface of the composite or laminates can be subjected to printing with ink. In an embodiment, an exposed surface of the composite or a laminate surface opposite the surface adjacent to the core can be subsequently decorated, in particular printed with markings such as alphanumerics, graphics, symbols, indicia, logos, aesthetic designs, multicolored regions, and a combination that includes at least one of the foregoing. In some embodiments, each ply can be decorated. In some embodiments, one of the exposed (or outer) surfaces of the composite can be subjected to common curing and/or surface modification processes. Non-limiting examples of such processes can include heat-setting, texturing, calendaring, embossing, corona treatment, flame treatment, plasma treatment, and vacuum deposition.

In some embodiments, the composite can include a cap layer material. The cap layer can be a film laminate made from a different polymer and process than the composite laminates. By way of example, it can be an extruded film material, which is for example chemical resistant to cleaning agents. Film materials used can include polyvinylidene fluoride (PVDF), polyvinyl fluoride (PVF), poly(methylmethacrylate) (PMMA), multilayered combinations and blends thereof. These film materials can be applied by roller lamination or double belt press lamination equipment. Also aesthetic film materials can be used to produce, for example, a wood grain or metallic surface. The cap layer can be created by co-extrusion (single or multi-manifold). In some embodiments, an anti-microbial surface can be created by co-extrusion of film materials with silver. In some embodiments, the cap layer can be made by screen-printing an aesthetic or functional ink layer. In most instances, these cap layers will be thermoformable.

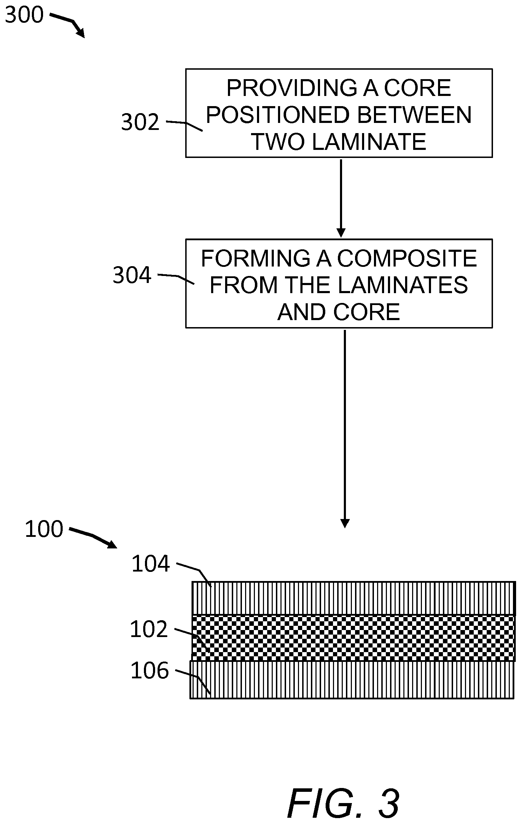

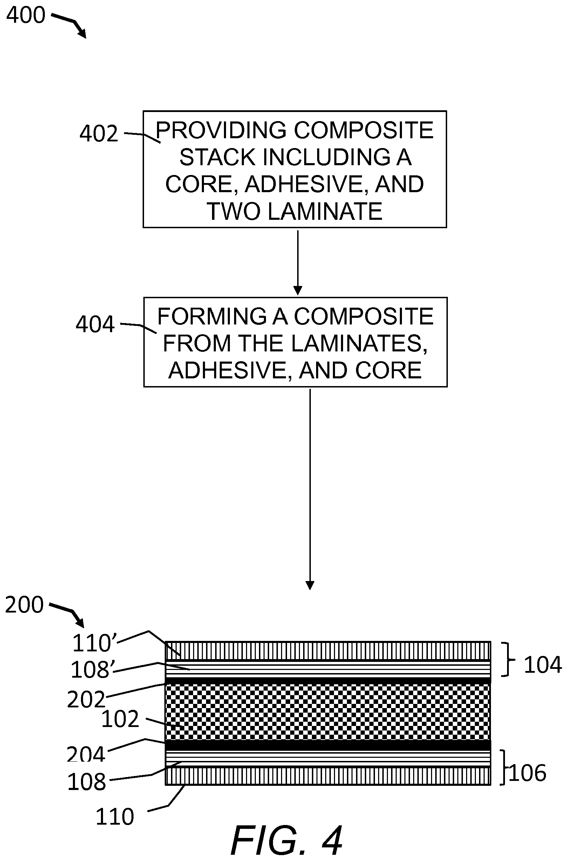

The fire-retardant composites (*e.g*., composites 100 and 200 in FIGS. 1 and 2) can be made using known panel consolidation techniques. By way of example, the fire-retardant composite can be made using continuous systems that include one or more machines capable of cutting, cooling, stacking, wrapping, or the like (for example, static heated presses, double belt presses and the like). FIGS. 3 and 4 are flow charts of methods to prepare fire-retardant composites 100 (FIG. 3) and 200 (FIG. 4). In step 302 of method 300, laminates 104, 106 and porous thermoplastic core 102 can be obtained. In some embodiments, the laminates can be include at least 2 or 3, 4, 5, 6, 7, 8, 9, 10 or more plies having a thickness of about 0.1 to 10 mm, or 0.25 to 5 mm. In some embodiments, the core density can be reduced to a desired density by patterning the core thermoplastic layer. Porous thermoplastic core 102 can be positioned between the two laminates. In step 304, the composite stack can be formed by heating and pressing the laminates and core together. By way of example the composite stack can enter a first zone of a double belt press at a pressure of 5 to 15 N/cm², or (0.5 to 1.5 MPa, or 0.5, 0.6, 0.7, 0.8, 0.9, 1, 1.1, 1.2, 1.3, 1.4, 1.5 MPa or any value or range there between) and then heated to a temperature of 140 to 150 °C, (*e.g.,* about 145 °C). The pressed stack can enter a second zone, be pressed, and the heated to 145 to 155 °C (*e.g.,* about 150 °C). The pressed stack can enter a third zone, be pressed and then heated at a temperature of 150 to 160 °C (*e.g.,* about 155 °C) to form the composite 100. In some embodiments, laminates 104 and 106 fully encapsulate core 102 after heat pressing.

In method 400, laminates 104, 106, core 102, and an adhesive can be obtained in step 402. In some embodiments, the core density can be reduced to a desired density by patterning the core thermoplastic layer. Core 102 can be positioned between the two laminates with adhesive being between at least one surface of the core and a laminate. In some embodiments, the surface of core 102 can be treated with the adherent prior to assembling the stack. In step 404, the composite stack can be formed by heating and pressing the laminates, adhesive and core together. By way of example, the composite stack can enter a first zone of a double belt press at a pressure of 5 to 15 N/cm², or (0.5 to 1.5 MPa, or 0.5, 0.6, 0.7, 0.8, 0.9, 1, 1.1, 1.2, 1.3, 1.4, 1.5 MPa or any value or range there between) and then heated to a temperature of 140 to 150 °C, (*e.g*., about 145 °C). The pressed stack can enter a second zone, be pressed, and the heated to 145 to 155 °C (*e.g.,* about 150 °C). The pressed stack can enter a third zone, be pressed and then heated at a temperature of 150 to 160 °C (*e.g.,* about 155 °C) to form the composite 200. In some embodiments, laminates 104 and 106 fully encapsulate core 102 after heat pressing.

The composites of the present invention can be used in transportation components. Non-limiting examples of transportation components can include floor panels, claddings, covers, and tray tables for train interiors. Non-limiting examples of claddings include: interior vertical surfaces, such as side walls, front walls, end-walls, partitions, room dividers, flaps, boxes, hoods and louvres; interior doors and linings for internal and external doors; window insulations; kitchen interior surfaces; interior horizontal surfaces, such as ceiling paneling, flaps, boxes, hoods and louvres; luggage storage areas, such as overhead and vertical luggage racks, luggage containers and compartments; driver's desk applications, such as paneling and surfaces of driver's desk; interior surfaces of gangways, such as interior sides of gangway membranes (bellows) and interior linings; window frames (including sealants and gaskets); (folding) tables with downward facing surface; interior and exterior surface of air ducts, and devices for passenger information (such as information display screens) and the like.

While the compositions described herein are designed for use preferably in railway interiors, it is to be understood that the compositions are also useful in other interior components that are required to meet the fire retardant test standards for rail applications. By way of example, the components can be used for interior bus articles of manufacture such as floor panels, claddings, covers, tray tables, and the like as described above.

### B. Core Material

The porous thermoplastic core (*See,* for example core 102 in FIGS. 1 and 2) can have an open-cell foam structure, a closed-cell foam structure, a honeycomb structure, or combinations thereof. In some embodiments, the porous thermoplastic core has a honeycomb structure that is filled with foamed thermoplastic material. The density of the core can be greater than or substantially equal to any one of, or between any two of: 20, 25, 50, 75, 100, 125, 150, 175, 200, 225, 250, 275, 300, 325, 350, 357, 400 Kgm⁻³. Polymers used for sandwich panel core 102 can be linear (non-crosslinked), partially crosslinked or fully crosslinked depending on the final application. Crosslinking of core material can be done during core manufacturing or be an additional processing operation. Core materials can include additional fillers and/or fire-retardant compositions. Fillers can include fiber or particles such as, for example, polytetrafluoroethylene (PTFE) nano-fibrillated fibers, inorganic fiber-particles, and the like. The amount and composition of the filler can include halogenated materials as long as the materials are not detrimental to the overall performance of the composite.

Core materials can include a polyethylene terephthalate (PET), a fire-retardant polypropylene (PP), a polycarbonate (PC), a polyimide, a polyethersulfone (PES), a polyurethane (PU), or a PPO/styrene blend, a PPO/polyamide blend, a PPE/polystyrene blend, a PPO/polypropylene blend a PPO-Si/polyamide blend, a PPO-Si/polystyrene blend, a PPO-Si/polypropylene blend, or any combination thereof. "Polypropylene" as used herein includes polypropylene and co-polymers thereof. "Polycarbonate polymers" as used herein include polycarbonate polymers and co-polymers thereof and are described in more detail below. "Polyimides" as used herein include polyimides and polyetherimides. Thermoplastic cores can be produced or are available from various commercial sources. By way of example, a PET core can be obtained from commercial sources such as Armacell Benelux S.A. (Beligum) under the tradename of ArmaFORM®, or from Diab Group (Sweden) under the tradename of Divinylcell P. In a preferred embodiment, the core is a PET foam. Fire-retardant polypropylene honeycomb cores can be obtained from EconCore N.V. (Belgium.) under the tradename ThermHex. Polyimide cores can be obtained from commercial suppliers such as DuPont™ (U.S.A.), Hexcel Corporation (U.S.A.), and the like. Aromatic polycarbonate resins suitable for use in the present disclosure can be commercially available, such as, for example, SABIC Lexan polycarbonate and copolymer resins. Non-limiting examples of Lexan materials include Lexan® HF1110, available from SABIC Innovative Plastics (U.S.A.), SABIC Lexan® CFR resins (core applications only). Other polycarbonate synthesized using any method known by those skilled in the art can also be employed. Polycarbonate polymers for use in the present disclosure can have any suitable molecular weight; for example, an average molecular weight of such a polycarbonate polymer can be from approximately 5,000 to approximately 40,000 grams per mol (g/mol).

### C. Laminates

One or multiple plies can include a thermoplastic polymer, a fire retardant composition, fibers, and a coupling agent. Thermoplastic polymers suitable for use in making the first or second laminate can include thermoplastic polymers that are the same or different from the thermoplastic polymers used for the core. Non-limiting examples of thermoplastic polymers include a polyarylene ether, preferably a polyphenylene ether (PPO) homopolymer, a PPO-polysiloxane (PPO-Si) copolymer, or a blend thereof a blend thereof. Polyamides include aliphatic and semi-aromatic polyamides. In an embodiment, the ply includes aliphatic polyamide, more specifically polyamide 6 or polyamide 66, PET, PBT, polyamides, polyimides, polycarbonates, polyarylene ethers (described below) or polyarylene ethers-silicon copolymers. Polyamides can also be obtained from DuPont (Zytel® and Zytel® HTN), BASF (Ultramid® A, B, C, S and Ultramid® T), Radici (Radipol®), DSM (Akulon® and Stanyl®), DOMO® (DOMAMID®) and Solvay (Technyl®). Polyimides can also be obtained from commercial suppliers such as RTP Co. (U.S.A.), DuPont™ (U.S.A.), or the like. In some embodiments, the polyamide can be a high flow polyamide, which has a relative viscosity of 2.0-2.3 as determined on a 1% solution in 96% sulfuric acid at 20 °C. Polyetherimides can be obtained from SABIC® under the tradename Ultem™ (*e.g*., Ultem™ 1010). Non-limiting examples of polycarbonates include LEXAN™ 115 resin-111, LEXAN™ ML7673-111N, LEXAN™ ML7697-111N, LEXAN™ ML5541-110001, LEXAN™ XHT1141 (high heat polycarbonate) from SABIC. Polyterphalates can be obtained from Invista (*e.g*., Invista 8918K). Polystyrene obtained either as high impact polystyrene or general purpose polystyrene from various commercial suppliers. Non limiting examples of commercial polystyrene include grades from Total S.A. (France), Trinseo (U.S.A.), Idimetsu (JAPAN), SABIC®, INEOS Styrolution (Germany), Supreme Styrene (South Africa), TOYO Styrene Col, LTD (JAPAN), TPSC Asia PTE (Singapore), and Americas Styrenics, LLC (U.S.A.). In a preferred embodiment, the polyarylene ethers or PPO-Si resins can be blended with polypropylene, preferably polypropylene homopolymer. Polypropylene can be obtained from various commercial suppliers. Non-limiting examples of commercial polypropylene include Achieve™ 6936G2 resin by ExxonMobil (U.S.A.), Braskem CP1220B by Songhan Plastic Technology Co., Ltd. (China), Moplen HP500V by LyondellBasell Industries Holding, B.V. (the Netherlands), and PP FPC100 by SABIC® (Saudi Arabia).

Polyarylene ethers useful in the present compositions can include repeating arylene ether units of the formula 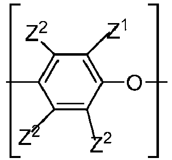 where for each structural unit, each Z¹ is independently halogen, unsubstituted or substituted C1-C12 hydrocarbyl provided that that the hydrocarbyl group is not tertiary hydrocarbyl, C1-C12 hydrocarbylthio, C1-C12 hydrocarbyloxy, or C2-C12 halohydrocarbyloxy wherein at least two carbon atoms separate the halogen and oxygen atoms; and each Z² is independently hydrogen, halogen, unsubstituted or substituted C1-C12 hydrocarbyl with the proviso that that the hydrocarbyl group is not tertiary hydrocarbyl, C1-C12 hydrocarbylthio, C1-C12 hydrocarbyloxy, or C2-C12 halohydrocarbyloxy wherein at least two carbon atoms separate the halogen and oxygen atoms. The polyarylene ether can be in the form of a homopolymer, a copolymer, a graft copolymer, an ionomer, or a block copolymer, as well as combinations comprising at least one of the foregoing. Polyarylene ethers include polyphenylene ethers comprising 2,6-dimethyl-1,4-phenylene ether units optionally in combination with 2,3,6-trimethyl-1,4-phenylene ether units. Polyarylene ethers are fully described in U.S. Patent No. 8,252,858 to Kishore et al., which is incorporated herein by reference. The polyarylene ether can comprise molecules having one or more aminoalkyl-containing end groups, typically located in an ortho position to the hydroxy group. Also frequently present are tetramethyldiphenoquinone (TMDQ) end groups, typically obtained from reaction mixtures in which tetramethyldiphenoquinone by-product is present.

In some embodiments, the thermoplastic matrix can include a polyphenylene ether-siloxane (PPO-Si) block copolymer. Such copolymer can be a mixture of poly(2,6-dimethyl-1,4-phenylene ether) (CAS Reg. No. 24938-67-8) and poly(2,6-dimethyl-1,4-phenylene ether)-polydimethylsiloxane block copolymer (CAS Reg. No. 1202019-56-4), the mixture having a polysiloxane content of about 5 weight percent and an intrinsic viscosity of about 0.4 deciliter per gram as measured in chloroform at 25° C.; prepared according to the procedure of U.S. Patent No. 8,017,697 to Carrillo et al., Example 16. Polyarylene siloxane block copolymers are fully described in U.S. Patent No. 8,252,858 to Kishore et al., which is incorporated herein by reference. PPO-Si copolymers are available from SABIC.

The ply includes greater than or substantially equal to any one of, or between any two of 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 49.5, 49.9, or 49.95 wt.% of polymer (polymeric matrix), based on the total weight of the ply.

The fire-retardant composition can include one more compounds known to inhibit or delay the spread of fire and/or reduce the flammability of the composition. In a particular embodiment, the fire-retardant composition is an intumescent fire-retardant, which inhibits or delays the spread of a fire. Non-limiting examples of fire-retardants include nitrogen-phosphorus compounds, phosphorous-containing containing compounds, nitrogen-containing polymers, halogen-containing polymeric compounds silica, organic polymers, silicon-phosphorous-nitrogen compounds, metal oxides, minerals, and mixtures thereof. Other components such as talc, inorganic sulfonates or salts thereof, hydrated oxides, nanoclays, organoclay can contribute to the fire retardant mechanism, but may not have any fire retardancy properties.

Non-limiting examples of nitrogen-phosphorus fire-retardant compounds include a nitrogen-containing phosphate, a nitrogen-containing polyphosphate, ammonium phosphate, ammonium polyphosphate (MPP), piperazine diphosphate, piperazine polyphosphate, melamine or a combination thereof.

Non-limiting examples of phosphorous containing compounds include organophosphorus compounds, diphosphinates, phosphates, organometallic phosphates or phosphinates, polyphosphates, polyphosphonate, non-halogenated organic phosphinates (*e.g.*, Exolit ® OP1312 by Clariant), phosphoric acid derivatives, phosphoric acid mixed esters with (1-1-biphenyl)-4-4-diol and phenol (*e.g.,* ADK STAB FP-600 (ADEKA Polymer Additives, Japan)), or combinations thereof. Non-limiting examples of organophosphorous compounds include organophosphate ester compounds, organopolyphosphonate compounds, phosphazene compounds including polyphphazenes, organophosphate esters. Non-limiting examples of organophosphate esters include esters substituted with phenyl groups, substituted phenyl groups, or a combination of phenyl groups and substituted phenyl groups. Non-limiting examples of organophosphate esters include tris(alkylphenyl)phosphate (for example, CAS Reg. No. 89492-23-9 or CAS Reg. No. 78-33-1), resorcinol bis(diphenyl phosphate) (CAS Reg. No. 57583-54-7), bisphenol A bis(diphenyl phosphate) (BPADP) (CAS Reg. No. 181028-79-5), bisphenol A polyphosphonates (BAPP) (*e.g.,* Nofia HM 1100 sold by FRX polymers (USA)), triphenyl phosphate (CAS Reg. No. 115-86-6), tris(isopropylphenyl)phosphate (CAS Reg. No. 68937-41-7), tetrakis(2,6-dimethylphenyl)-m-phenylene bisphosphate (CAS Reg. No. 139189-30-3), triphenyl phosphate, tricresyl phosphate, oligomeric aryl polyphosphate esters (*e.g*., Fryolflex™ Sol-DP by ICI Industrial products (USA)), and any combination thereof. Non-limiting example of an organometallic phosphinate includes diethyl aluminum phosphinate (DEPAL) sold under the tradename Exolit ® OP1240 by Clariant (Switzerland)). Polyphosphazenes (*e.g*., phenoxyphosphazene) are sold under the tradename Rabitle® FP-110 by Fushimi Pharmaceutical Co. Ltd, (Japan)) or SPB-100 by Osuka Chemical Co., LTD (Japan).

Non-limiting examples of organic sulfonates include potassium perfluorobutane sulfonate (RIMAR salt), potassium 3-(phenylsulfonyl)benzenesulfonate (KSS), sodium toluenesulfonate, or sodium trichlorobenzene sulfonate, and the like. Non-limiting examples of halogen containing organic polymers include tetrabromo-bisphenol-A (TBBA) or a mixture of BPA-bisphenol-A polycarbonate and tetrabromo-bisphenol-A). Such polymers can be obtained from SABIC under the tradename LEXAN™ 105B-11IN. Fire retardant additives are available from various commercial vendors and can be a mixture of compounds.

Nitrogen-phosphorus fire-retardant compounds and/or compositions are described in U.S. Patent No. 7,803,856 to Perego et al., U.S. Patent Application Publ. Nos. 2013/0248783 to Zhu et al., and 2016/0244600 to Kurokawa, or can be obtained from commercial sources such as Adeka Palmarole (Japan) under the tradenames ADK STAB FP-2100JC, ADK STAB FP-2200S and ADK STAB FP-2500S. Non-limiting examples of nitrogen-containing polymers include poly(2,4-piperazinyl-6-morpholinyl-1,3,5-triazine), poly(2,4-piperazinyl-6-morpholinyl-1,3,5-triazine). Non-limiting examples of metal oxides include zinc oxide, magnesium oxide, iron oxide, titanium dioxide, antimony oxide. In a preferred embodiment, zinc oxide is used. Non-limiting examples of minerals include clay, mica, Wollastonite, and the like. Clays can include kaolin (hydrated aluminum silicate 97.5%+ titanium dioxide 2.5%). Mica such as grade Zemex Suzorite Mica 200HK obtained from Imerys; particle size 50 micron , aspect ratio 55. Clay such as Kaolin (hydrated aluminum silicate 97.5%+ Titanium dioxide 2.5%) obtained from KAMIN. Wollastonite (calcium silicate) such as VM8N or K330HF obtained from (Keiwa fine material) and FUJI TALC INDUSTRIAL CO, LTD (JAPAN).

The total amount of fire-retardant composition in the ply can be vary depending on the fire retardant combination and polymeric matrix. By way of example, a PET and/or PBT or polyamide containing polymeric matrix can include 1 to 15 wt.%, preferably 2 to 10 wt.%, or greater than or substantially equal to any one of, or between any two of 1, 2, 3, 4, 5, 6, 7, 8, 9, 10, 11, 12, 13, 14 or 15 wt.% of the fire retardant additive. In another example, a polycarbonate containing polymeric matrix can include 1 to 10 wt.%, preferably 1 to 8 wt.%, or greater than or substantially equal to any one of, or between any two of 1, 2, 3, 4, 5, 6, 7, 8, 9, or 10 wt.% of a phosphorous containing fire retardant additive, preferably an organophosphorous material. In yet another example, a polycarbonate containing polymeric matrix can include 0.01 to 10 wt.%, preferably 0.01 to 3 wt.%, or greater than or substantially equal to any one of, or between any two of 0.01, 0.1, 1, 2, 3, 4, 5, 6, 7, 8, 9, or 10 wt.% of an organic sulfonate containing compounds, a halogen containing organic polymeric material or both as the fire retardant material. In another example, a polyarylene ether containing polymeric matrix can include 0.5 wt.% to 10 wt.%, preferably 0.6 to 7.5 wt.%, or greater than or substantially equal to any one of, or between any two of 0.5, 1, 2, 3, 4, 5, 6, 7, 8, 9, or 10 wt.% of a phosphorous containing fire retardant additive, preferably an organophosphorous material.

Non-limiting examples of fibers include glass fibers, carbon fibers, aramid fibers, thermoplastic fibers, ceramic fibers, basalt fibers, steel fibers, and/or the like. Non-limiting examples of thermoplastic fibers include polyethylene fibers, polyester fibers, polyamide fibers with or without fire retardant additives (FR thermoplastic fibers) incorporated into the fiber. The ply can include, based on the total weight of the ply, 50 to 80 wt.% fibers or greater than or substantially equal to any one of, or between any two of: 50, 55, 60, 65, 70, 75, 80 wt.% fibers. Fibers (*e.g.,* 120) of a composite (*e.g.,* 100 and/or 200) may be provided in bundles (*e.g.,* bundles of carbon, ceramic, carbon precursor, ceramic precursor, glass, and/or the like fibers). Such bundles may include any number of fibers, such as, for example, 400, 750, 800, 1,375, 1,000, 1,500, 3,000, 6,000, 12,000, 24,000, 50,000, 60,000, or more fibers. Fibers in a bundle can have an average filament diameter of 5, 6, 7, 8, 9, 10, 1 1, 12, 13, 14, 15, 16, 17, 18, 19, 20, 21, 22, 23, 24, 25, or more microns (*e.g*., from 5 to 30 microns, 10 to 20 microns, 12 to 15 microns, or any range there between). Fibers can be provided with a coating (*e.g.* a coating of an organic polymer, such as an organosilane), a pigment, and/or the like. Fibers can also be provided as a woven mat.

Coupling agents can include maleic anhydride grafted polyethylene, maleic anhydride grafted ethylene copolymer, citric acid, styrene ethylene/butylene block copolymer with high styrene content, or a combination that includes at least one of the foregoing. The ply can include, based on the total weight of the ply, 0.1 to 2 wt.% coupling agent or greater than or substantially equal to any one of, or between any two of: 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, or 2 wt.% of coupling agent. In a preferred instance, no coupling agent is necessary.

In some embodiments, ply can optionally include additives such as antioxidants, heat stabilizers, flow modifiers, mold release agents, colorants, smoke suppressants (*e.g*., silicone fluids that contain amine functionality and dimethylpolysiloxane units), anti-drip agents (TSAN), fillers, lubricants, silicon containing siloxanes (*e.g*., octaphenylcyclotetrasiloxane), or any combinations thereof. An amount of additives range from 0.01 to 5 wt.%, or 0.01, 0.02, 0.03, 0.04, 0.05, 0.06, 0.07, 0.08, 0.09, 0.1, 0.5, 0.75, 1, 2, 3, 4, or 5 wt.% or any range or value there between. Non-limiting examples of antioxidants include benzenepropanoic acid, 3,5-bis(1,1-dimethylethyl)-4-hydrox-octadecyl ester; pentraertythritol tetrakis(3,5-di-tert-butyl-4-hydroxyhydrocinnamate); pentaerythritol tetrakis(3-laurylthiopropionate); 1,2-bis(3,5-di-tert-butyl-4-hydroxy hydrocinnamoyl)hydrazide; tris(2,4-di-*tert*-butylphenyl)phosphite (TBPP), or any combination thereof.

Mold release additives can include liner low density polyethylene, low density polyethylene, or polyoxyethylene ether, or any combination thereof. Non-limiting examples of stabilizers can include zinc oxide, zinc sulfide, magnesium oxide, copper iodide, potassium iodide or the like.

In embodiments when the fiber containing thermoplastic matrix include polyterephthalates, antioxidants, stabilizers, antidrip agents (*e.g.,* TSAN), impact modifiers (*e.g.,* Paraloid™ EXL impact modifiers from DOW® (USA), and quenchers can also be present in addition to fibers. In embodiments, when the fiber containing thermoplastic matrix includes polycarbonates or copolymers thereof, antioxidants and/or octaphenylcyclotetrasiloxane can also be present in the thermoplastic matrix in addition to the fire retardant compositions. In embodiments when the fiber containing thermoplastic matrix includes polyamides, antioxidants, thickeners, and antidrip agents can also be present in the thermoplastic matrix in addition to the fire retardant compositions. In embodiments when the fiber containing thermoplastic matrix includes polyimides, antioxidants can also be present in the thermoplastic matrix in addition to the optional fire retardant compositions. In embodiments, when polyarylene ethers are included in the polymeric matrix, coupling agents such as citric acid, or styrene ethylene/butylene styrene block copolymer with high styrene content can also be present in the thermoplastic matrix in addition to the fire retardant compositions. Such compositions can also optionally include at least one of a smoke suppressant such as silicone fluid that contains amine functional and dimethylpolysiloxane units, TSAN as an antidrip agent, minerals such as clay, kaolin (hydrated aluminum silicate 97.5%+ titanium dioxide 2.5%), mica or Wollastonite (calcium silicate), a flow promotor such as hydrogenated hydrocarbon resin, and/or a lubricant such as erucamide.

Plies used to produce the laminates can be obtained from commercial sources or made from resin compositions described herein. By way of example, one or more of the plies can be made by dispersing fibers in a polymer matrix of the present invention as described in International Application Publication No. WO 2016/142786 to Prins et al., which is incorporated by reference in its entirety. In such a method, a sheet or film that includes the thermoplastic polymer and/or the fire-retardant composition can be supplied between a first and a second spreaded fiber layers. Heat can be applied to the fiber layer/polymer composition/fiber layer material, followed by pressing the fiber layers into the polymer composition. In some embodiments, after pressing is completed, the first or second fiber layers can be rubbed. In some embodiments, the fibers are not spread prior to heating. In another embodiment, the plies can be made by using known impregnation techniques. For example, Miller et al. in Polymers & Polymer Composites, 1996, Vol. 4, No. 7 describes impregnation techniques for thermoplastic matrix composites, which is incorporated by reference in its entirety. One such method can include providing suppling fibers to one or more solution baths (*e.g*., thermoplastic polymer and/or fire retardant composition in one or two baths) to form resin impregnated fibers, drying the fibers, and then pressing the fibers to produce a ply (*e.g.,* prepreg sheets). In another embodiment, the polymer and fibers can be stacked together, heated, and then pressed causing the resin to flow transverse to the fibers to from prepreg sheets of reinforced thermoplastic materials.

Each of the plies can have a length and a width that is perpendicular to and smaller than the length, where the length and the width are each a distance between outer edges of the ply measured along a straight line. The length can be, but need not be, the largest such distance. Each of the plies can have a shape and dimensions that correspond to the shape and dimensions of laminate 104 or 106 and/or composite 100 and 200. To further illustrate, the largest face of each of the plies can have a surface area that is substantially equal to a surface area of the largest face of laminate 104 or 106. To yet further illustrate, each of the plies can be rectangular. In other embodiments, one or more plies of a laminate can have a shape and/or dimensions that differ from the shape and/or dimensions of the laminate; such plies can, for example, be used to add stiffness and strength to a portion of the laminate that is smaller than the entirety of the laminate.

Referring back to FIGS. 1B and 1C composite 100 with four plies (plies 108, 108', 110 and 110') and six plies (ply 108, 110, 112, 114, 116, and 118), respectively is depicted. At least one ply can include a thermoplastic fire-retardant polymeric matrix having a plurality of fibers dispersed therein. Some embodiments of the present methods include producing a laminate (*e.g.,* 104 or 106) at least by stacking two or more plies (*e.g.,* including one or more of any plies described above in a 0/90 orientation). By way of example, at least 2 or 3, 4, 5, 6, 7, 8, 9, 10 or more plies having a thickness of about 0.1 to 10 mm, or 0.25 to 5 mm can be stacked. During such stacking, any number of the laminates can be formed by placing sections (*e.g*., plies 108 and 110) of ply material, such as, for example, sections of unidirectional fiber plies, adjacent to one another. In some methods, the two or more plies include two or more unidirectional first ply and one or more unidirectional second ply, and the stacking is performed such that: (1) fibers of the first ply are aligned in a first direction; (2) fibers of the one or more second ply are aligned in a second direction that is perpendicular to the first direction; and (3) the one or more second plies are disposed in contact with one another and between two of the first plies.

Plies (*e.g.,* 108, 108', 110, 110', 112, 114, 116, 118, *etc.*) that include fibers (*e.g.,* fibers 120) can have a pre-consolidation fiber volume fraction (V_{f}) that is greater than or substantially equal to any one of, or between any two of: 40, 45, 50, 55, 60, 65, 70, 75, 80, 85, or 90%. In some embodiments of the present laminates, one or more plies may not include fibers; such ply can, for example, include a sheet of thermoplastic polymer material (*e.g*., polymer 122 in FIG. 1).

The laminates can be prepared using known lamination methods. It should be understood that laminates (*e.g*., laminates 104 and 106) can be made of plies having the same or different compositions. By way of example, ply 108, ply 110, and ply 112 can each have a different composition or plies 108, 110, 112, 114, 116 and 118 can have the same or different compositions. In another example, laminate 104 can be made of multiple plies where each ply have the same composition, while laminate 106 can be made of multiple plies where each ply have a composition different than the ply that make up laminate 104.

One or all of the plies (*e.g.,* 108, 108', 110, 110', 112, 114, 116, 118, *etc*.) can include fibers (*e.g.,* fibers 120) dispersed within a matrix material or pressed into the polymer matrix material. By way of example, the laminates can be prepare using a double belt press with integrated contact heating and cooling supplied by, for example Meyer® (Maschinenfabrik, Herber Meyer GmbH, Germany). The different plies (*e.g.,* plies 108 and 110) can enter the heat press unit in a defined stacking sequence at a rate of 1.5 m/min. The ply stack can be pressed together in a first zone at a pressure of 0.1 to 0.4 N/cm², or (1 to 4 kPa, or 1, 1.5, 2, 2.5, 3, 3.5, 4 kPa or any value or range there between) and then heated to a temperature of 170 to 185 °C, (*e.g*., about 180 °C). The pressed stack can enter a second zone, pressed, and the heated to 190 to 200 °C (*e.g.,* about 195 °C). The pressed stack can enter a third zone, be pressed at a lower temperature of 185 to 195 °C (*e.g.,* about 190 °C) to form the laminate (*e.g*., laminate 104 and/or 106). Heating and cooling can be maintained without release of pressure. In some embodiments, a static heated press can be used.

In laminate 104 and/or 106, each of plies (*e.g.,* plies 108, 108', 110, 110', 112, 114, 116, 118, *etc*.) can be a unidirectional ply, or a ply having fibers (*e.g.,* fibers 120), substantially all of which are aligned in a single direction. More particularly, in each of the plies, the fibers can be aligned with either the length of laminate 104/106 (*e.g.,* plies 110, 110' of FIG. 1B each of which may be characterized as a 0-degree unidirectional ply) or the width of the laminate (*e.g.,* plies 108 and 108' of FIG. 1B each of which may be characterized as a 90-degree unidirectional ply). The phrase, "aligned with" means within 10 degrees of parallel. Other embodiments of the present laminates can include one or more unidirectional plies, each having fibers that are aligned in any suitable direction. For example, a unidirectional ply can include fibers aligned in a direction, where the smallest angle between the direction and a length of a laminate including ply can be greater than or substantially equal to any one of, or between any two of: 0, 5, 10, 15, 20, 25, 30, 35, 40, 45, 50, 55, 60, 65, 70, 75, 80, 85, or 90 degrees.

Some embodiments of the present laminates can include one or more plies, each having fibers that define a woven structure (*e.g*., as in a ply having a plane, twill, satin, basket, leno, mock leno, or the like weave). For example, a ply can include a first set of fibers aligned in a first direction and a second set of fibers aligned in a second direction that is angularly disposed relative to the first direction, where the first set of fibers is woven with the second set of fibers. A smallest angle between first direction and second direction can be greater than or substantially equal to any one of, or between any two of: 10, 15, 20, 25, 30, 35, 40, 45, 50, 55, 60, 65, 70, 75, 80, 85, or 90 degrees. The smallest angle between first direction and a length of a laminate including such a ply can be greater than or substantially equal to any one of, or between any two of: 0, 5, 10, 15, 20, 25, 30, 35, 40, 45, 50, 55, 60, 65, 70, 75, 80, 85, or 90 degrees.

Some embodiments of the present laminates can include one or more plies, each formed from sections of ply material. For example, a unidirectional ply can be formed from sections of unidirectional fiber material that has been placed adjacent to one another. To form such a ply, sections of ply material can be placed adjacent to one another manually and/or by an automated material laying machine.

Referring to FIG. 1C, 0-degree unidirectional plies and 90-degree unidirectional plies can be stacked such that the 0-degree unidirectional plies are in contact with one another (meaning each is in contact with at least one other) and are disposed between two of the 90-degree unidirectional plies. In some embodiments, laminates 104 and 106 can include first and second sub-stacks of 90-degree unidirectional plies and a third sub-stack of 0-degree unidirectional plies, where the third sub-stack is disposed between the first and second sub-stacks. In laminates 104 and 106, each of the sub-stacks can include three plies. However, in other embodiments, such sub-stacks can each be replaced with a single ply or can include 2, 3, 4, 5, 6, 7, 8, 9, or more plies. Other embodiments of the present laminates can include any suitable plies (*e.g*., including one or more of any ply described above) stacked in any suitable configuration (*e.g*., balanced, symmetric, asymmetric, and/or the like).

### D. Compliance Standards

The composites, laminates and/or plies of the present invention can be compliant with rail transportation standards. (*e.g*., EN 45545-2; R1 (HL1, HL2, HL3), R6, R10, TB/T (TBT), NFPA 130, ASTM E662 and ASTM E162, Chinese standard TB/T or the International Union of Railways standard UIC 564). In an embodiment, the non-structural components meet certain criteria set forth in European Railway standard EN-45545 (2013). The European Union has approved the introduction of a set of fire testing standards for the railroad industry that includes flammability, flame spread rate, heat release, smoke emission, and smoke toxicity requirements for materials used in railway vehicles, known as European Railway standard EN-45545 (2013). Based on the vehicle material, end-use, and fire risks, 26 different "Requirement" categories for materials have been established (R1-R26). The R1, R2, R5, R10, R11 cover, among others, interior vertical surfaces, such as side walls, front walls, end-walls, partitions, room dividers, flaps, boxes, hoods and louvres; interior doors and linings for internal and external doors; window insulations, kitchen interior surfaces, interior horizontal surfaces, such as ceiling paneling, flaps, boxes, hoods and louvres; luggage storage areas, such as overhead and vertical luggage racks, luggage containers and compartments; driver's desk applications, such as paneling and surfaces of driver's desk; interior surfaces of gangways, such as interior sides of gangway membranes (bellows) and interior linings; window frames (including sealants and gaskets); (folding) tables with downward facing surface; interior and exterior surface of air ducts, and devices for passenger information (such as information display screens) and the like. The composites, laminates, and/or plies of the present invention can meet the requirements for HL1, HL2, and HL3 for R10 applications. R6, R8 and R7 cover interior surface of gangways, external body shell (wall and underframe) external exterior ducts, external design features, outer surface of water containers placed in the underframe, bogie part, air bags for pneumatic suspension, cable containment for exterior, arc splash barrier materials, parts of the drive, tires, flexible metal/rubber unit including element in bogies.

The composites, laminates, and/or plies of the present invention may be used meet NFPA 130 (2010 edition) for interior applications used in the United States rail transportation vehicles. This standard imposes requirements on rate of smoke generation and surface flammability. The generation of smoke is measured *via* ASTM E662-12 smoke density test and the requirements are a preferred smoke density after 1.5 min (Ds 1.5) of 100 and less and a maximum smoke density after 4 min (Ds 4) of 200 and less, in either flaming or non-flaming mode. Surface flammability is measured *via* the ASTM E162-12a flame spread test and the requirements are a maximum flame spread index (Is) of 35 and less, and no flaming running or dripping allowed. It is calculated from multiplying the flame spread factor (Fs) and the heat evolution factor (Q) determined during the test. The railway components described herein can also meet these standards.

In one embodiment, the fire-retardant composite has a maximum four minute smoke density, Dₛₘₐₓ, of less than about 300 as measured by ISO 5659-2 on a 75 x 75 x 18 mm thick composite, and a maximum average heat release (MAHRE) of equal to or less than 90 kW/m² measured according to ISO 5660-1:2015 on a 100 mm x 100 mm x 18 mm thick composite at 25 kW/m². In another embodiment, one or all of the laminates can have maximum four minute smoke density, Dₛₘₐₓ, of less than about 300 as measured by ISO 5659-2.

All references cited herein are hereby completely incorporated by reference to the same extent as if each reference were individually and specifically indicated to be incorporated by reference and were set forth in its entirety herein.

The following includes definitions of various terms and phrases used throughout this specification.

As used herein, the term "hydrocarbyl", whether used by itself, or as a prefix, suffix, or fragment of another term, refers to a residue that contains only carbon and hydrogen. The residue may be aliphatic or aromatic, straight-chain, cyclic, bicyclic, branched, saturated, or unsaturated. It may also contain combinations of aliphatic, aromatic, straight chain, cyclic, bicyclic, branched, saturated, and unsaturated hydrocarbon moieties. However, when the hydrocarbyl residue is described as "substituted", may contain heteroatoms over and above the carbon and hydrogen members of the substituent residue. Thus, when specifically described as substituted, the hydrocarbyl residue may also contain halogen atoms, nitro groups, cyano groups, carbonyl groups, carboxylic acid groups, ester groups, amino groups, amide groups, sulfonyl groups, sulfoxyl groups, sulfonamide groups, sulfamoyl groups, hydroxy groups, alkoxy groups, or the like, and it may contain heteroatoms within the backbone of the hydrocarbyl residue.

The terms "about" or "approximately" are defined as being close to as understood by one of ordinary skill in the art. In one non-limiting embodiment, the terms are defined to be within 10%, preferably within 5%, more preferably within 1%, and most preferably within 0.5%.

The terms "wt.%", "vol.%", or "mol.%" refers to a weight, volume, or molar percentage of a component, respectively, based on the total weight, the total volume of material, or total moles, that includes the component. In a non-limiting example, 10 grams of component in 100 grams of the material is 10 wt.% of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The fire-retardant composites of the present invention can "comprise," "consist essentially of," or "consist of' particular ingredients, components, compositions, etc. disclosed throughout the specification. With respect to the transitional phase "consisting essentially of," in one non-limiting aspect, a basic and novel characteristic of the thermoplastic fire-retardant composites of the present invention are their abilities to be compliant with respect to interior rail transportation fire-retardant standards.

### EXAMPLES

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

### Example 1

### (Fire-Retardant PPE and PPO-Si Plies)

The fire-retardant plies were made from a resin composition of blends based on PPE or PPO-Si, or blends of PPE and/or PPO-Si with either polystyrene (high impact or general purpose), polyamide 6/polyamide 66 or polypropylene homopolymers and a phosphorous containing fire retardants as shown in Table 1. The resins were combined with fibers (50 wt.% and 80 wt.%) to make plies having the amounts shown in Table 2 (50 wt.% fibers) and Table 3 (80 wt.% fibers). The description of the ingredients are listed in Table 1 and all amounts in the tables are in weight percentages. Fire retardant testing was performed according to EN45545-2 R10 Rating (Smoke density).

**Table 1**

| | | **#1** | **#2** | **#3** | **#4** | **#5** | **#6** | **#7** |
|---|---|---|---|---|---|---|---|---|
| **Name** | **Description** | **%** | **%** | **%** | **%** | **%** | **%** | **%** |
| 630 (SABIC) | A poly(2,6-dimethylphenylene ether) with an intrinsic viscosity of 0.33 dI/gas measured in chloroform at 25° C. | | 69.55 | | | | | |
| 640 (SABIC) | A poly(2,6-dimethylphenylene ether) with an intrinsic viscosity of 0.40 dI/gas measured in chloroform at 25° C. | 69.55 | | | | | | |
| 843 (SABIC) | A mixture of poly(2,6-dimethyl-1,4-phenylene ether) (CAS Reg. No.24938-67-8) and poly(2,6-dimethyl-1,4-phenylene ether)-polydimethylsiloxane block copolymer (CAS Reg. No. 1202019-56-4) | | | 69.55 | 71.80 | 75.05 | 73.70 | 75.05 |
| TOTAL_ 960EPO (TOTAL petrochemicals) | A high impact polystyrene having a polybutadiene content of 9.8 to 10.8 weight percent based on the total weight of the high impact polystyrene. This HIPS typically has rubber particle size between 1 to 2 microns. | 10.00 | 10.00 | 10.00 | 11.75 | 13.50 | 12.35 | 13.50 |
| BDP (Jingsu Yoke technology) | Bisphenol A bis(diphenyl phosphate) (CAS Reg. No. 5945-33-5) | 10.00 | 10.00 | 10.00 | 10.00 | 5.00 | 7.50 | 10.00 |
| "KRATON™ D1101 (Kraton Corp.)" | A polystyrene-polybutadiene-polystyrene block copolymer | 5.00 | 5.00 | 5.00 | 5.00 | 5.00 | 5.00 | 0.00 |
| Citric acid anhydrous (Azelis) | CAS Reg. No. 77-92-9 | 0.50 | 0.50 | 0.50 | 0.00 | 0.00 | 0.00 | 0.00 |
| SF1706 (Momentive Performance Materials Inc.) | A polysiloxane having primary amine functional groups in an amount of 0.46 milliequivalents per gram of polysiloxane and a viscosity of 10 to 50 centistokes (CAS Reg. No. 67923-07-3). The polysiloxane also has methoxy groups attached to terminal silicone atoms. | 3.50 | 3.50 | 3.50 | 0.00 | 0.00 | 0.00 | 0.00 |
| ESCORENE™ LL51OO.O9 (ExxonMOBIL) | Linear low density polyethylene (copolymer of ethylene and 1-butene), CAS Reg. No. 25087-34-7, having a density of 0.925 grams per cubic centimeter and a melt volume flow rate of 20 cubic centimeters per 10 minutes at 190° C and 2.16 kilogram load | 0.50 | 0.50 | 0.50 | 0.50 | 0.50 | 0.50 | 0.50 |
| CR-4 (GH CHEMICAL) | Zinc oxide | 0.15 | 0.15 | 0.15 | 0.15 | 0.15 | 0.15 | 0.15 |
| SACHTOLITH™HD-S (Sachtleben Chemie GmbH) | Zinc sulfide | 0.30 | 0.30 | 0.30 | 0.30 | 0.30 | 0.30 | 0.30 |
| Irganox® 1076 (BASF) | Benzenepropanoic acid, 3, 5-bis(1, 1-dimethylethyl)-4-hydroxy-octadecyl ester | 0.20 | 0.20 | 0.20 | 0.20 | 0.20 | 0.20 | 0.20 |
| SEENOX 412S (Shipro Kasei Kaisha) | Pentaerythritol tetrakis(3-dodecylthiopropionate) | 0.30 | 0.30 | 0.30 | 0.30 | 0.30 | 0.30 | 0.30 |
| **TOTAL** | | 100.00 | 100.00 | 100.00 | 100.00 | 100.00 | 100.00 | 100.00 |
| **Smoke density Dsmax ISO5659-2 (EN45545) norm** | | HL3 | HL3 | HL3 | HL2 | HL2 | HL2 | HL3 |

| | | **#9** | **#10** | **#11** | **#12** | **#13** | | |
|---|---|---|---|---|---|---|---|---|
| **Name** | **Description** | | **%** | **%** | **%** | **%** | | |
| 630 (SABIC) | A poly(2,6-dimethylphenylene ether) with an intrinsic viscosity of 0.33 dI/gas measured in chloroform at 25° C. | 61.55 | | | | | | |
| 843 (SABIC) | A mixture of poly(2,6-dimethyl-1,4-phenylene ether) (CAS Reg. No.24938-67-8) and poly(2,6-dimethyl-1,4-phenylene ether)-polydimethylsiloxane block copolymer (CAS Reg. No. 1202019-56-4) | | 64.55 | 68.55 | 67.55 | 68.30 | | |
| TOTAL_960EPO (TOTAL petrochemicals) | A high impact polystyrene having a polybutadiene content of 9.8 to 10.8 weight percent based on the total weight of the high impact polystyrene. This HIPS typically has rubber particle size between 1 to 2 microns. | 15.00 | 16.00 | 18.50 | 16.25 | 18.00 | | |
| SABIC®PP 505P (SABIC Europe) | Polypropylene, CAS Reg. No. 9003-07-0, having a melt mass flow index of about 1-2 grams per 10 minutes measured at 230°C. and 2.16 kilogram, and a weight average molecular weight of about 170,000 atomic mass units | | | | | | | |
| BDP (Jingsu Yoke technology) | Bisphenol A bis(diphenyl phosphate) (CAS Reg. No. 5945-33-5) | 13.00 | 13.00 | 6.50 | 9.75 | 9.75 | | |
| KRATON™ D1101 | A polystyrene-polybutadiene-polystyrene block copolymer | 5.00 | 5.00 | 5.00 | 5.00 | 2.50 | | |
| Citric acid anhydrous (Azelis) | CAS Reg. No. 77-92-9 | 0.50 | 0.00 | 0.00 | 0.00 | 0.00 | | |
| SF1706 (Momentive Performance Materials Inc.) | A polysiloxane having primary amine functional groups in an amount of 0.46 milliequivalents per gram of polysiloxane and a viscosity of 10 to 50 centistokes (CAS Reg. No. 67923-07-3). The polysiloxane also has methoxy groups attached to terminal silicone atoms. | 3.50 | 0.00 | 0.00 | 0.00 | 0.00 | | |
| Pluronic F88 (BASF) | A polyepoxide mold release agent (a copolymer of propylene oxide and ethylene oxide) | 0.50 | 0.50 | 0.50 | 0.50 | 0.50 | | |
| CR-4 (GH CHEMICAL) | ZINC OXIDE | 0.15 | 0.15 | 0.15 | 0.15 | 0.15 | | |
| SACHTOLITH™HD-S (Sachtleben Chemie GmbH) | Zinc sulfide, CAS Reg. No. 1314-98-3 | 0.30 | 0.30 | 0.30 | 0.30 | 0.30 | | |
| Irganox® 1076 (BASF) | Benzenepropanoic acid, 3, 5-bis(1, 1-dimethylethyl)-4-hydrox-, octadecyl ester | 0.20 | 0.20 | 0.20 | 0.20 | 0.20 | | |
| SEENOX 412S (Shipro Kasei Kaisha) | Pentaerythritol tetrakis(3-dodecylthiopropionate) | 0.30 | 0.30 | 0.30 | 0.30 | 0.30 | | |
| **Glass Fiber** | | 0.00 | 0.00 | 0.00 | 0.00 | 0.00 | | |
| **TOTAL** | | 100 | 100 | 100 | 100 | 100 | | |
| **Smoke density Dsmax ISO5659-2 (EN45545) norm** | | HL3 | HL3 | HL2 | HL2 | HL2 | | |

| | | **#14** | **#15** | **#16** | **#17** | **#18** | | |
|---|---|---|---|---|---|---|---|---|
| **Name** | **Description** | **%** | **%** | **%** | **%** | **%** | | |
| 630 (SABIC) | A poly(2,6-dimethylphenylene ether) with an intrinsic viscosity of 0.33 dI/gas measured in chloroform at 25° C. | | | | | 37.14 | | |
| 646 (SABIC) | A poly(2,6-dimethylphenylene ether) with an intrinsic viscosity of 0.46 dI/gas measured in chloroform at 25° C. | | | 61.40 | | | | |
| 640 (SABIC) | A poly(2,6-dimethylphenylene ether) with an intrinsic viscosity of 0.40 dI/gas measured in chloroform at 25° C. | | | | 42.50 | | | |
| 843 (SABIC) | A mixture of poly(2,6-dimethyl-1,4-phenylene ether) (CAS Reg. No.24938-67-8) and poly(2,6-dimethyl-1,4-phenylene ether)-polydimethylsiloxane block copolymer (CAS Reg. No. 1202019-56-4) | 38.45 | 56.54 | | | | | |
| DICSTYRENE CR-3500 (DIC Corporation) | General Purpose Polystyrene | | | | 12.50 | 27.00 | | |
| STABAMID®26FE1 (Solvay) | Polyamide 66 | 31.11 | | | | | | |
| Nylene® RD928 (Custom resins) | Polyamide 6 | 22.20 | | | | | | |
| SABIC®PP 505P (SABIC Europe) | Polypropylene, CAS Reg. No. 9003-07-0, having a melt mass flow index of about 1-2 grams per 10 minutes measured at 230°C. and 2.16 kilogram, and a weight average molecular weight of about 170,000 atomic mass units | | 28.77 | | | | | |
| BDP (Jingsu Yoke technology) | Bisphenol A bis(diphenyl phosphate) (CAS Reg. No. 5945-33-5) | | 8.93 | | 7.00 | | | |
| WSFRRDP (Wansheng) | Resorcinol bis(diphenyl phosphate) (CAS Reg. No. 57583-54-7) | | | 14.51 | | 4.36 | | |
| Exolit® OP 1230 (Clariant Corporation) | Aluminum tris(diethyl phosphinate) | 6.65 | | | | | | |
| CYCOLAC™Resin INP449 (SABIC) | TSAN | | | 0.10 | | | | |
| KRATON™ G1651 | A polystyrene-poly(ethylene-butylene)-polystyrene block copolymer | | | 4.84 | 2.00 | | | |
| Tuftec™ H1043 (Asahi Kasei Corporation) | Hydrogenated Styrene Butadiene Rubber | | 4.96 | | | | | |
| Citric acid anhydrous (Azelis) | CAS Reg. No. 77-92-9 | 0.88 | | | | | | |
| ARKON™P125 (Arakawa Chemicals Limited) | Saturated polyalicyclic hydrocarbon resin, CAS Reg. No. 64742-16-1 | | | | 4.50 | | | |
| SUZORIT®HK-200 (Imerys) | Phlogopite mica, CAS Reg. No. 12001-26-2 | | | | 10.00 | 30.00 | | |
| POLYFIL®HG90 ( KaMin Performance Minerals.) | Water-washed kaolin clay, CAS Reg. No. 1332-58-7, | | | 16.92 | | | | |
| SICATECH K-330F (Keiwa Fine Materials Co., Ltd.) | Calcium Silicate | | | | 20.00 | | | |
| ESCORENE™ LL51OO.O9 (ExxonMOBIL) | Linear low density polyethylene (copolymer of ethylene and 1-butene), CAS Reg. No. 25087-34-7, having a density of 0.925 grams per cubic centimeter and a melt volume flow rate of 20 cubic centimeters per 10 minutes at 190° C. and 2.16 kilogram load | | | 0.97 | 1.50 | | | |
| Polythylene J2516 (UBE Industries, Ltd.) | Polyethylene | | | | | 1.50 | | |
| KEMAMIDE®E ULTRA POWDER (PMC Biogenix Inc.) | (Z)-Docos-13-enamide | | | 0.48 | | | | |
| CR-4 (GH CHEMICAL) | ZINC OXIDE | | | 0.15 | | | | |
| SACHTOLITH™HD-S (Sachtleben Chemie GmbH) | Zinc sulfide, CAS Reg. No. 1314-98-3 | | 0.10 | 0.15 | | | | |
| Irganox® 1076 (BASF) | Benzenepropanoic acid, 3, 5-bis(1, 1-dimethylethyl)-4-hydrox-, octadecyl ester | 0.33 | | | | | | |
| SEENOX 412S (Shipro Kasei Kaisha) | Pentaerythritol tetrakis(3-dodecylthiopropionate) | | | | | | | |
| Potassium iodide | CAS Reg. No. 7681-11-0 | 0.33 | | | | | | |
| Cuprous iodide | CAS Reg. no. 7681-65-4 | 0.05 | | | | | | |
| Irganox®MD 1024 | 1,2-Bis(3,5-di-tert-butyl-4-hydroxyhydrocinnamoyl)hydrazide | | 0.10 | | | | | |
| Magnesium Oxide | CAS. No. 1309-48-4 | | 0.10 | | | | | |
| Irganox® 1010 (BASF) | Tetrakis methylene (3, 5-di-tert-butyl-4-hydroxyhydrocinnamate) methane | | 0.30 | | | | | |
| Irgafos® 168 (BASF) | Tris(2,4-di-t-butylphenyl)phosphite | | 0.20 | 0.48 | | | | |
| **Glass Fiber** | | 0.00 | 0.00 | 0.00 | 0.00 | 0.00 | | |
| **TOTAL** | | 100.00 | 100.00 | 100.00 | 100.00 | 100.00 | | |
| **Smoke density Dsmax ISO5659-2 (EN45545) norm** | | HL3 | HL2 | HL2 | HL3 | HL3 | | |

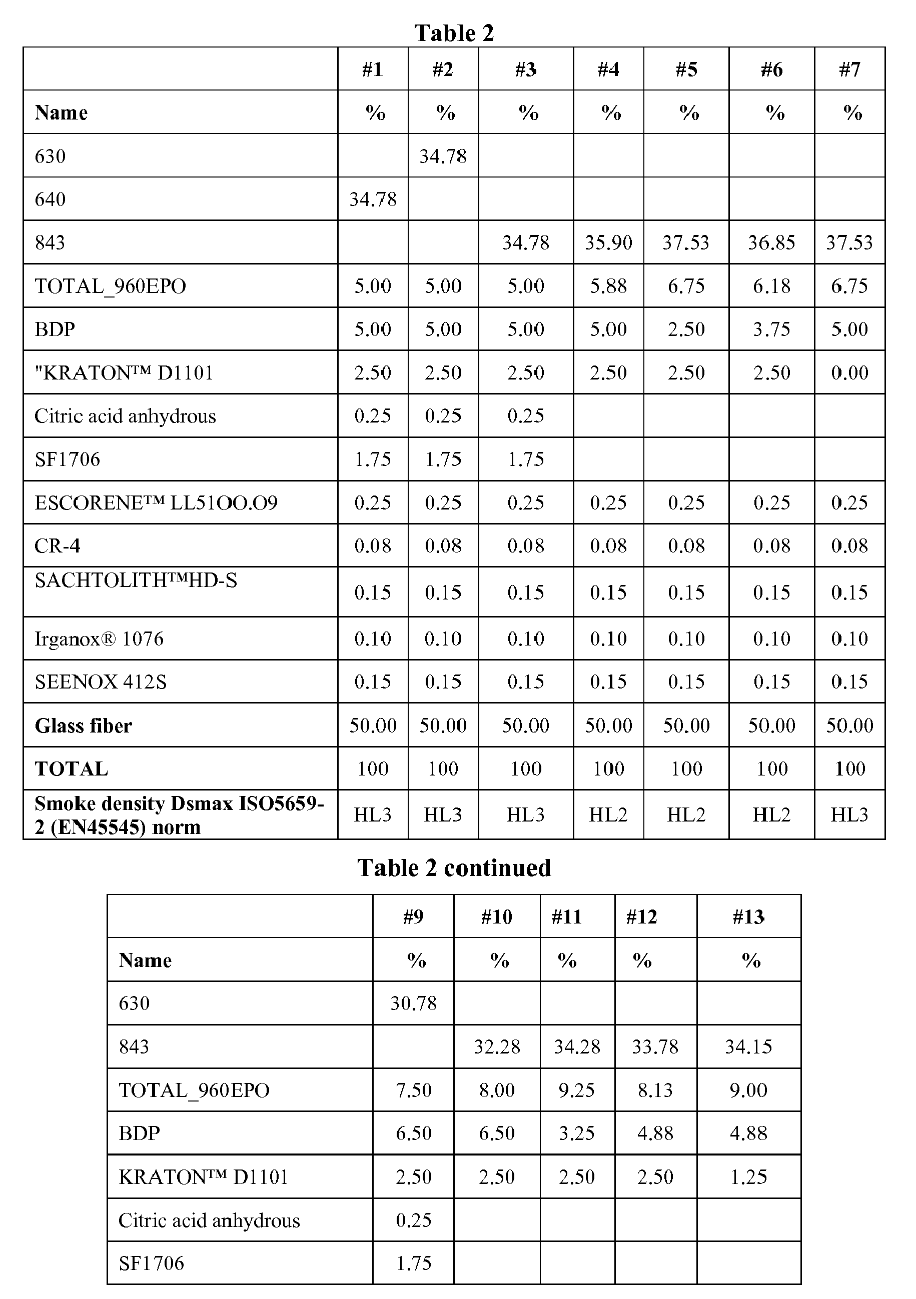

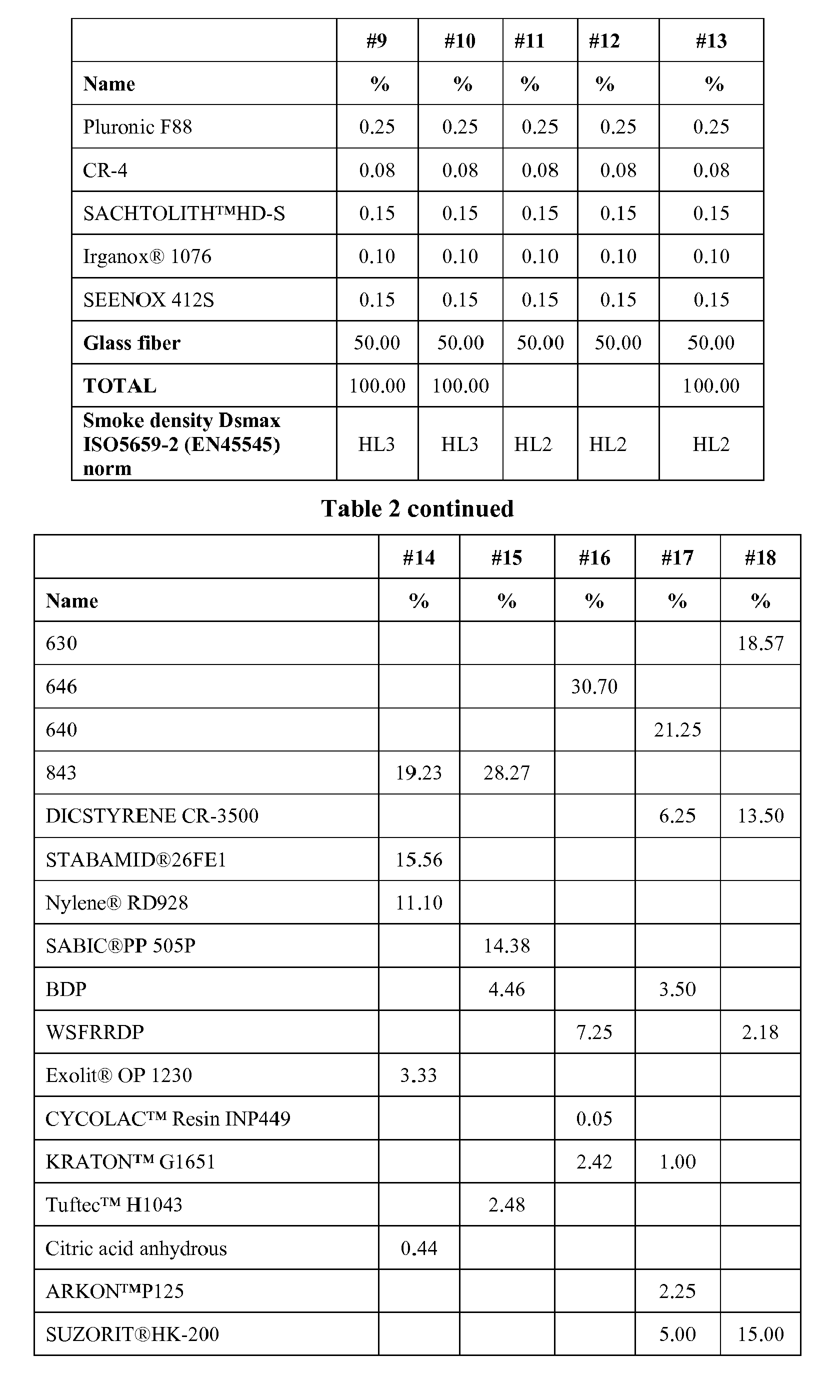

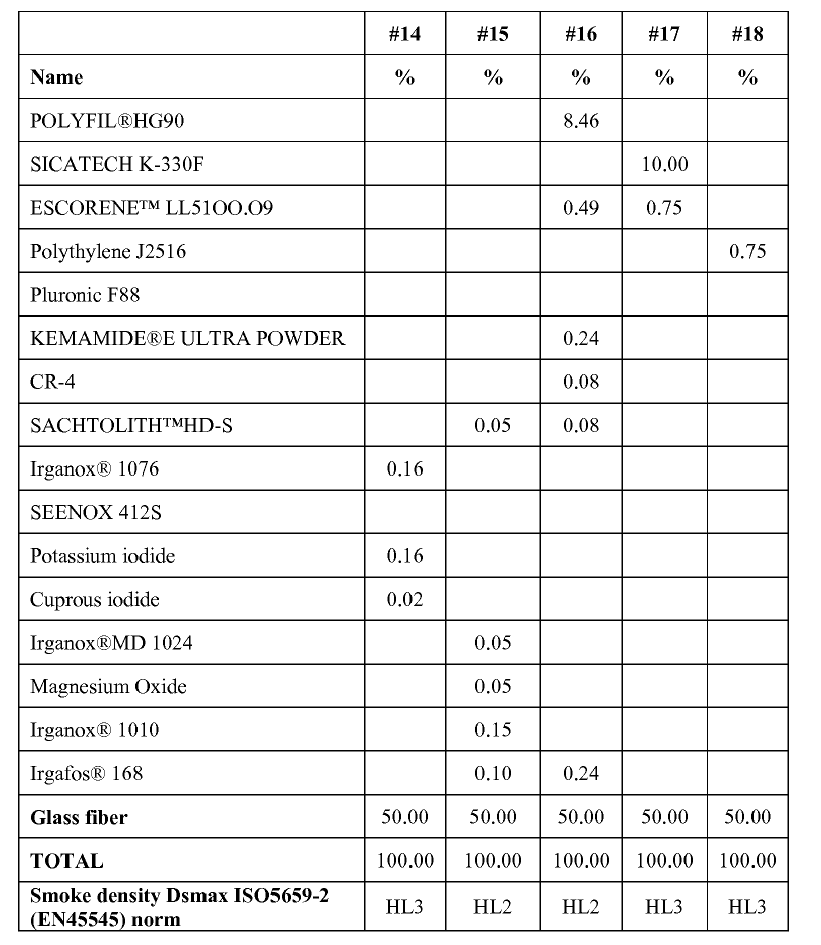

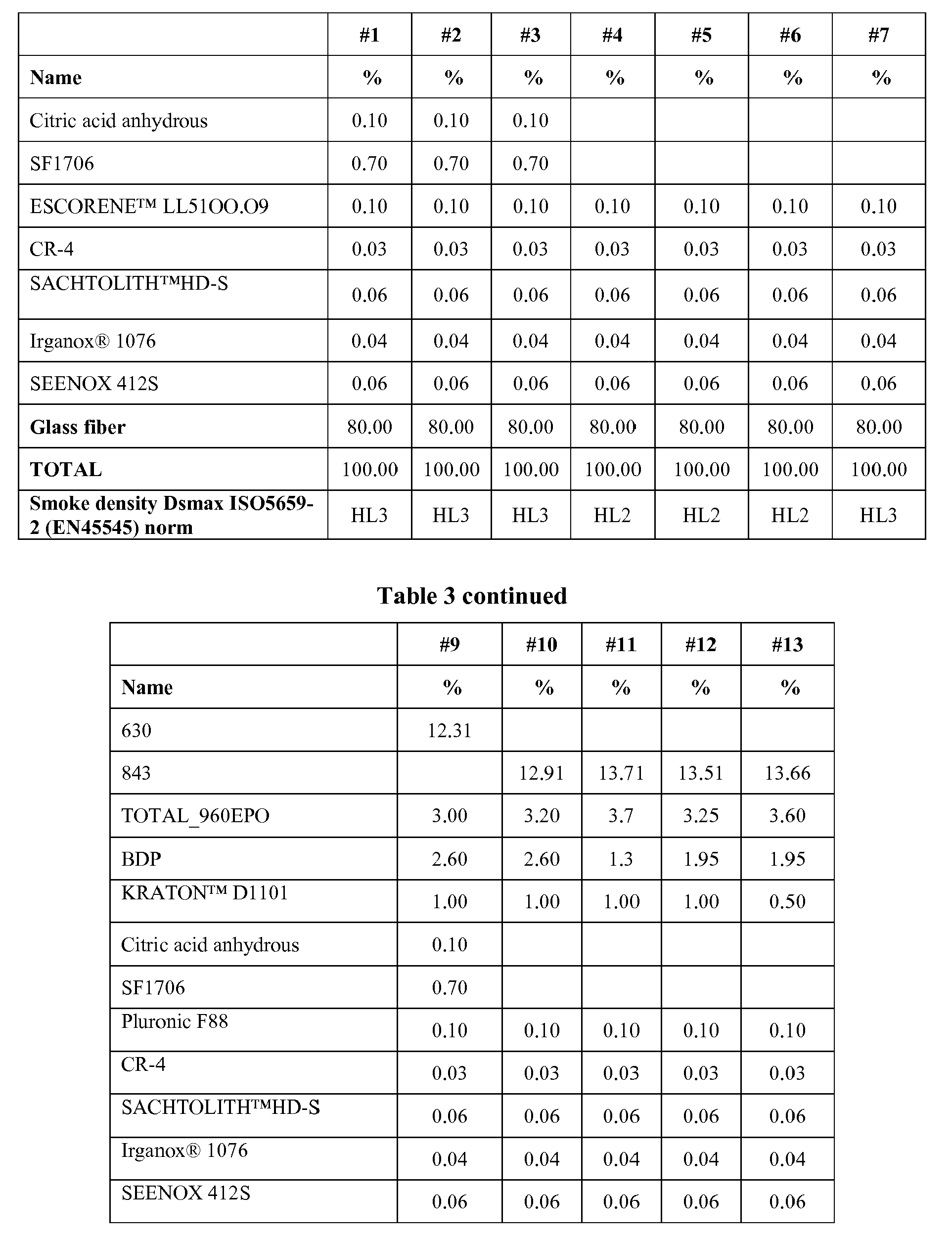

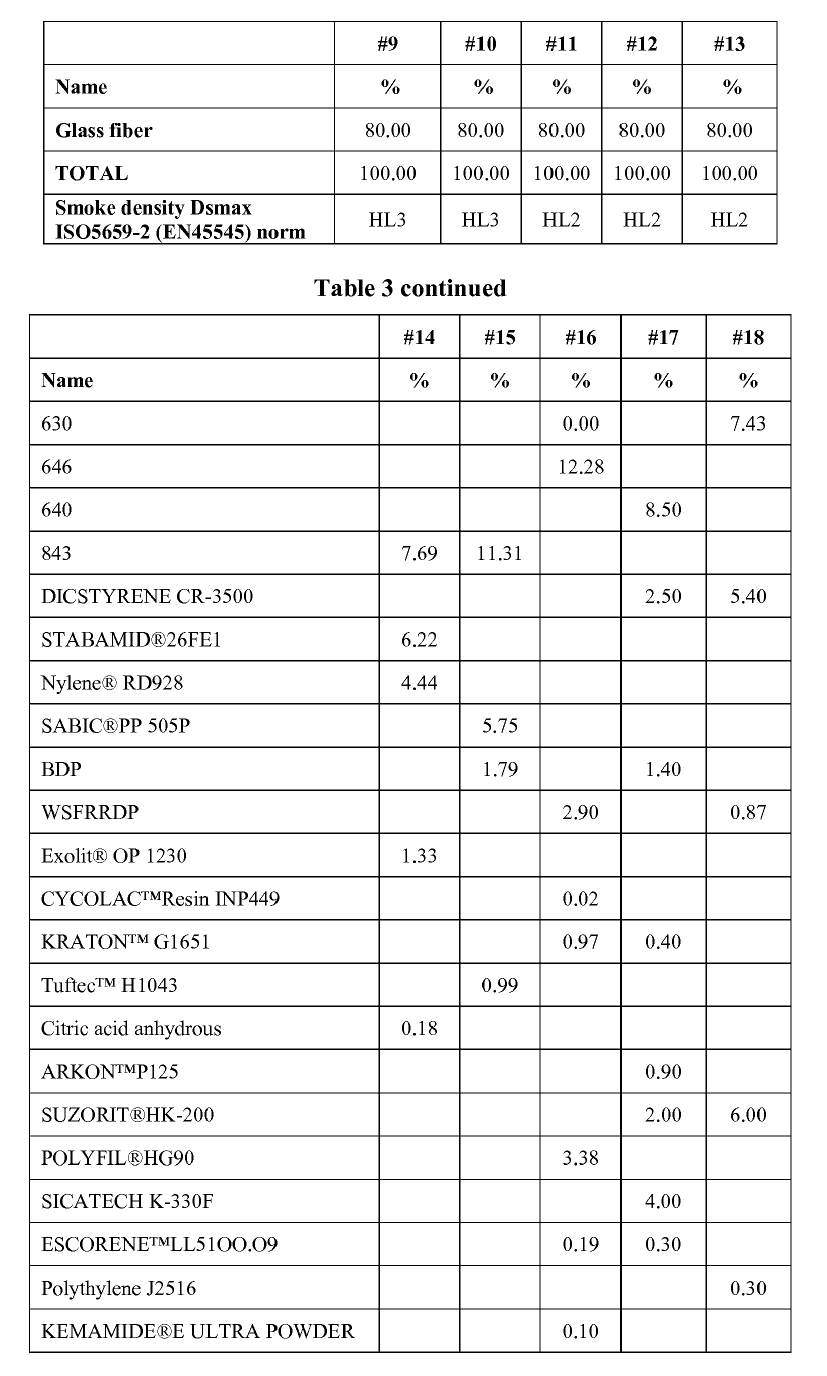

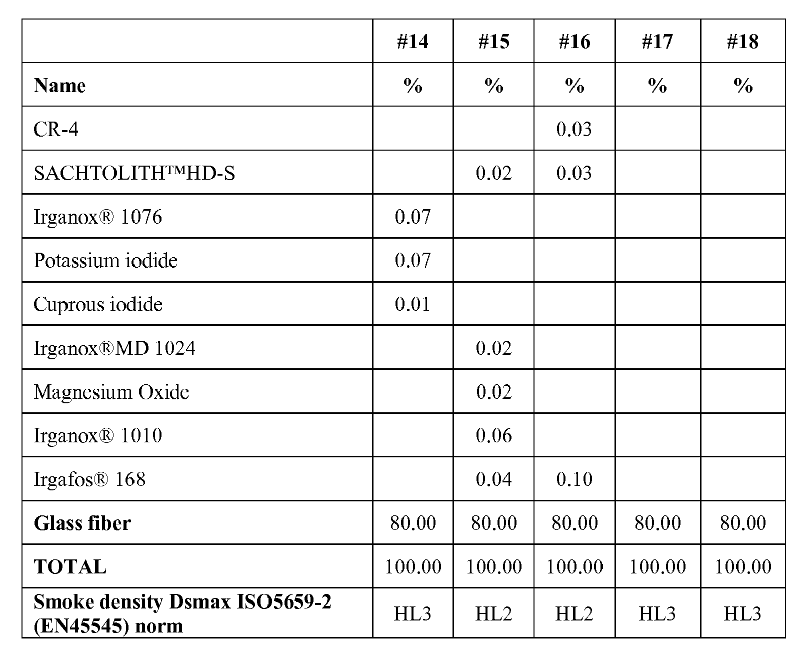

## Claims

1. A fire-retardant laminate comprising one or more ply, at least one ply comprising:
(i) 15 wt.% to less than 50 wt.% based on the total weight of the ply, of a thermoplastic polymer matrix comprising:
a polyarylene ether, preferably a polyphenylene ether (PPO) homopolymer, a PPO-polysiloxane (PPO-Si) copolymer, or a blend thereof;
a blend of polyarylene ether and/or a PPO-Si copolymer with a different thermoplastic material comprising a polyamide material, a polystyrene material, or a polypropylene homopolymer, or any combination thereof; and
(ii) 0.5 to 15 wt.%, based on the total weight of the ply, a fire-retardant composition comprising phosphorous containing compound; and
(iii) 50 to 80 wt.%, based on the total weight of the ply, of fibers.

2. The fire-retardant laminate of claim 1, wherein the phosphorous containing compound is an organophosphorous compound, preferably, an aryl phosphate compound, an organopolyphosphonate compound.

3. The fire-retardant laminate of any one of claims 1 to 2, wherein the fibers comprise glass fibers, carbon fibers, aramid fibers, ceramic fibers, basalt fibers, steel fibers, thermoplastic fibers, preferably fire-retardant thermoplastic fibers, or combinations thereof.

4. The fire-retardant laminate of claim 3, wherein the fibers are glass fibers and substantially all of the glass fibers are continuous unidirectional glass fibers dispersed within the thermoplastic polymer matrix.

5. The fire-retardant laminate of any one of claims 1 to 4, wherein the laminate comprises at least 2 plies or at least 3 plies.

6. A fire-retardant composite, comprising:
(a) a porous core material comprising a first thermoplastic polymer
(b) a first laminate, the first laminate being the laminate of any one of claims 1 to 5;
(c) a second laminate disposed on a side opposite the first side of the core, wherein the second laminate is the same or different than the first laminate; and
(d) an optionally at least one adherent layer contacting at least a portion of the surface of the porous core material and at least a portion of the surface of at least one of the laminates.

7. The fire-retardant composite of claim 6, wherein the first thermoplastic polymer comprises polyethylene terephthalate, a fire-retardant polypropylene, a polycarbonate, a polyimide, a polyethersulfone, a polyurethane, a polyphenylene ether/styrene blend, PPO/polyamide blend, PPO/polystyrene blend, PPO/polypropylene blend, a PPO-Si/polyamide blend, a PPO-Si/polystyrene blend, a PPO-Si/polypropylene blend, or any combination thereof.

8. The fire-retardant composite of any one of claims 6 to 8, wherein the core material has an open-cell foam structure, a closed-cell foam structure, a honeycomb structure, or combinations thereof.

9. The fire-retardant composite of any one of claims 6 to 8, wherein the optional adherent layer comprises ethylene vinyl acetate, polypropylene, polypropylene-polyethylene terephthalate blends, acrylics, nitriles, silicone rubbers, styrene-butadiene-styrene copolymers, styrene-ethylene/butylene-styrene copolymers, styrene-ethylene/propylene copolymers, styrene-isoprene-styrene copolymers, or a combination thereof, preferably ethylene vinyl acetate.

10. The fire-retardant composite of any one of claims 6 to 9, wherein the composite has an average thickness between 0.2 mm and 100 mm.

11. The fire-retardant composite of any one of claims 6 to 10, wherein the first laminate and second laminate are the same.
